# EUROPÄISCHE PATENTSCHRIFT

(11) **EP 0 777 455 B1**
(45) Veröffentlichungstag und Bekanntmachung des Hinweises auf die Patenterteilung: **05.09.2001**
(21) Anmeldenummer: 96920688.7
(22) Anmeldetag: 13.06.1996
(51) Int. Cl.: A61H 3/06, G01S 15/88, G01S 7/52, G01S 7/56

(54) **ULTRASCHALLBRILLE FÜR BLINDE UND SEHBEHINDERTE**
ULTRASONIC SPECTACLES FOR THE BLIND AND VISUALLY DISABLED
LUNETTES A ULTRASONS POUR AVEUGLES ET MALVOYANTS

(30) Priorität: 27.06.1995 DE 19525010
(43) Veröffentlichungstag der Anmeldung: 11.06.1997
(73) Patentinhaber: Obrira Gmbh, 14712 Rathenow (DE)
(72) Erfinder: VOGEL, Karl-Heinz, D-54293 Trier (DE)
(74) Vertreter: Köhler, Reimund
(86) Internationale Anmeldenummer: DE9601077
(87) Internationale Veröffentlichungsnummer: WO9701320

(56) Entgegenhaltungen:
- DE-A- 2 931 837
- US-A- 3 987 403
- SID INTERNATIONAL SYMPOSIUM DIGEST OF PAPERS, BOSTON, MAY 17 - 22, 1992, Nr. VOL. 23, 17.Mai 1992, SOCIETY FOR INFORMATION DISPLAY, Seiten 94-97, XP000479000 EASTON R D: "7.3: ACOUSTIC AND VIBROTACTILE PERCEPTION OF DEPTH THROUGH MOTION"
- JOURNAL OF THE ACOUSTICAL SOCIETY OF AMERICA, Bd. 70, Nr. 2, - 31.August 1981 NEW YORK US, Seiten 313-320, XP002006044 GOLDSTEIN ET AL: "acoustic analysis of the sonic guide"

## Beschreibung

Die Erfindung betrifft eine Ultraschallbrille für Blinde und stark Sehbehinderte.

Ultraschall-Orientierungshilfen sind in verschiedenen Ausführungen bekannt. So gibt es Geräte, die wie eine Taschenlampe gehandhabt werden und taktile Signale oder Tonhöhenänderungen als Entfernungsinformation weitergeben. Auch sind Geräte bekannt, die umgehängt werden und vor Hindernissen warnen. Ferner sind Ultraschall-Orientierungshilfen bekannt, die einen Schallsender und zwei getrennt angeordnete Schallempfänger besitzen (vergleiche DE-AS 1548479 und US 4761770).
Es ist weiterhin eine Orientierungshilfe nach DE-29 31 837 bekannt, mit einem Schwingungspakete aussendenden Geber und einem Signale aufnehmendende Empfänger sowie mit einer die Signale auswertenden/umsetzenden Auswerteinheit und mit einer Ausgabeeinheit, die die Informationen dem Benutzer zugänglich macht.
Nachteilig bei den bekannten Ultraschall-Orientierungshilfen ist ein nicht definitiv voreinstellbares Gesichtsfeld und eine nicht vorhandene Fehlererkennung.
Der Erfindung liegt die Aufgabe zugrunde, eine Ultraschallbrille zu schaffen, die am Sitz der Augen wie eine Brille getragen wird und mit der man die räumliche Verteilung von Hindernissen, deren Richtung und Entfernung erkennen kann und die ein genau definiertes, voreinstellbares Gesichtsfeld erzeugt und eine Fehlererkennung ermöglicht.

Zur Lösung dieser Aufgabe wird eine Ultraschallbrille mit einem Ultraschallsender und zwei unabhängig voneinander angeordneten Ultraschallempfängern mit getrennter Auswerteschaltung vorgeschlagen, die es ermöglicht, das Gesichtsfeld mittels Potentiometer voreinzustellen, um so die Reichweite der Ultraschallbrille in fünf gleiche Abschnitte zu unterteilen und über Vibrationsgeber entlang der Stirn anzuzeigen. Die hier angewendete Entfernungsanzeige in fünf unterteilten Stufen entspricht einer quasidigitalen Anzeige, im Gegensatz zu einer aus der Elektronik hinreichend bekannten Digital-Anzeige mit sieben-segment-Anzeigen. Durch das vorwählbare Gesichtsfeld kann jeder Stufe eine gleichgroße Reichweite zugeordnet werden. Wenn z.B. das Gesichtsfeld mittels Potentiometer auf 3 m festgelegt wird, so wird jeder der fünf Schaltstufen eine Reichweite von 3:5=0,6 m zugeordnet. Ferner besitzt die Ultraschallbrille eine Fehlererkennung, die dem Blinden anzeigt, wenn er sich auf das Gerät nicht mehr verlassen kann. Diese Situation tritt z.B. immer dann auf, wenn kein Hindernis im Gesichtsfeld oder kurz dahinter vorhanden ist oder wenn das Ultraschallsignal durch Totalreflexion nicht zum Ultraschallempfänger zurückgeworfen wird. Eine Totalreflexion tritt an glatten Oberflächen, wie z.B. Glas und Spiegelglatten Flächen auf. Dieser Zustand wird dem Blinden dadurch vermittelt, daß sämtliche Vibrationsgeber abgeschaltet werden. In einer weiteren Ausgestaltung der Erfindung soll die Ultraschallbrille auch für Sehbehinderte mit einem Restsehvermögen verwendbar sein. Zu diesem Zweck werden die Ultraschallsensoren, bestehend aus Sende- und Empfangssensoren, an eine optische Brille angebaut, ebenso die Vibrationsgeber. Neben der üblichen Information über den Seheindruck wird dem Blinden zusätzlich über die Ultraschallbrille ein schlecht erkennbares Hindernis signalisiert, z.B. eine Glastür im Eingangsbereich von Warenhäusern etc.. In Verbindung mit Vibrationsgebern können auch Leuchtdioden eingesetzt werden, die im Sehfeld angeordnet werden und deren Aufleuchten die Entfernung zu einem Hindernis angeben.

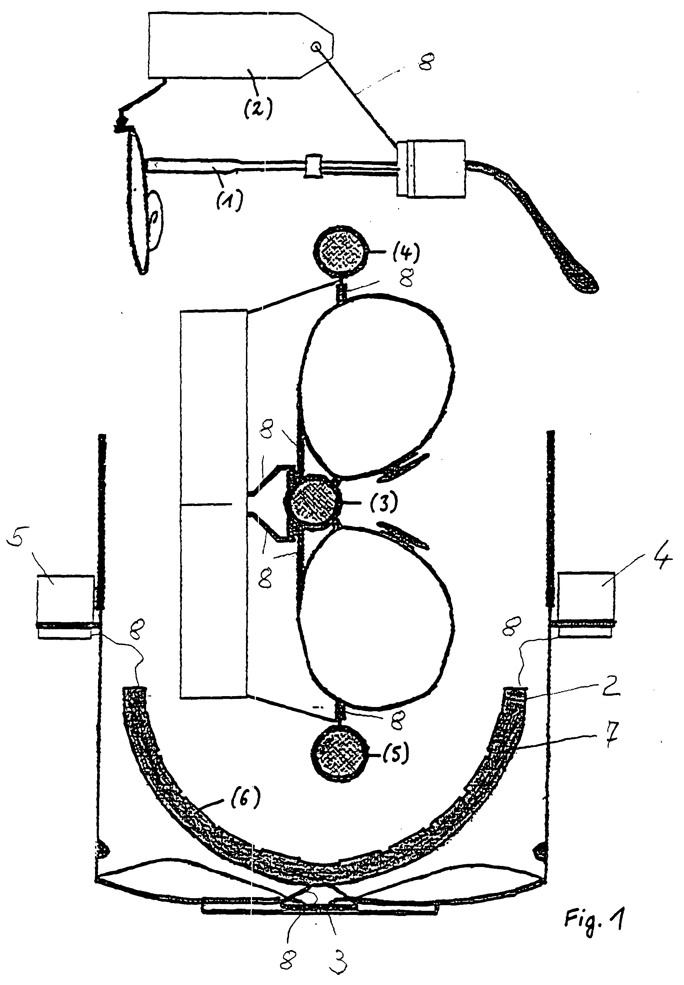

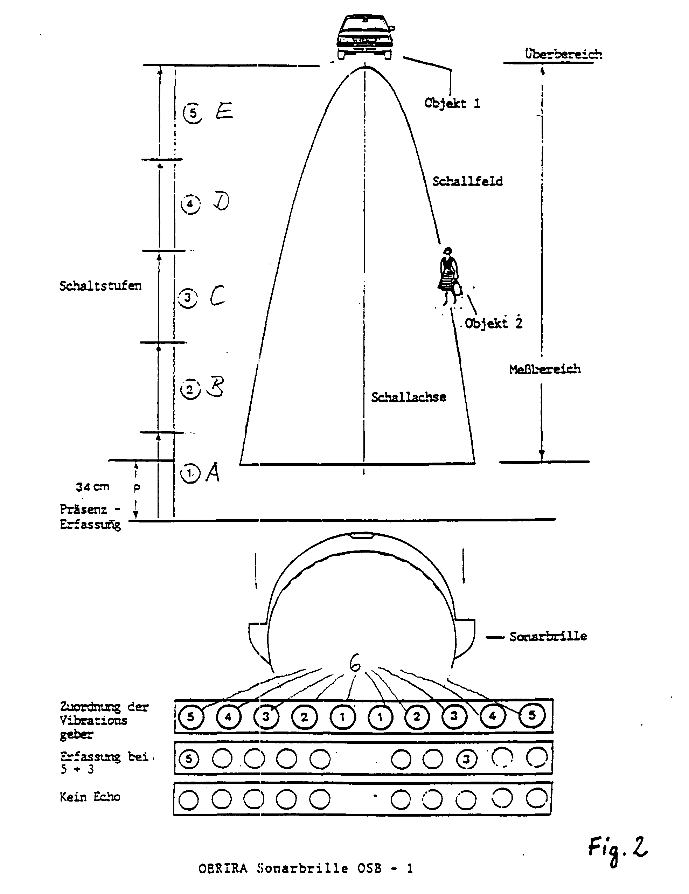

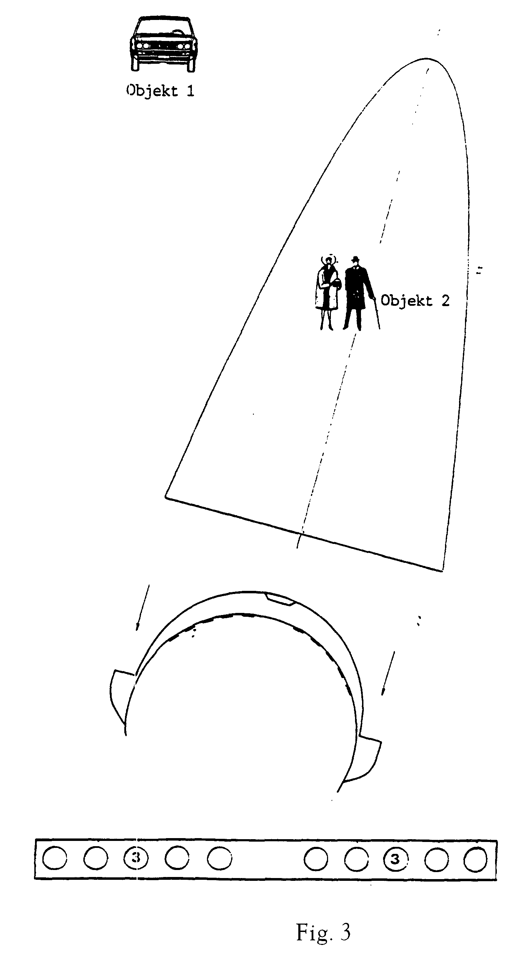

Nachfolgend soll mit Hilfe eines Ausführungsbeispiels an Hand der Zeichnungen die Erfindung näher erläutert werden. Die Fig.1 zeigt als Ausführungsbeispiel die Ultraschallbrille. Erfindungsgemäß besteht die Ultraschallbrille aus einem handelsüblichen Brillengestell (1) zur Aufnahme des Gebers (3) und der Empfänger (4, 5). An das Brillengestell (1) ist ein Stirnband (2) zur Aufnahme der Vibrationsgeber (6) montiert. Ein Ultraschallwandler dient als Geber (3). Ultraschallwandler sind die Empfänger (4, 5). Ein Vibrationsgeber (6) ist zu jeweils zwei Paaren a fünf Stück auf der linken bzw. rechten Seite des Stirnbandes (2) befestigt. Durch die elektronische Ansteuerung sind die äußeren Vibrationsgeber (6) bei der größten darstellbaren Distanz zu einem Hindernis aktiv. Das Signal wandert bei einer Annäherung an das Hindernis von den äußeren zu den inneren Vibrationsgebern (6). Die elektronischen Komponenten wie Stromversorgung, Spannungsüberwachung, Senderansteuerung, getrennte Empfänger für rechten und linken Kanal, Auswerteelektronik und Vibrationsgeberansteuerung sind in einem separaten Gehäuse, der Auswerteinheit (7) untergebracht und werden über flexible Kabel (8) mit der Ultraschallbrille verbunden. In Fig.2 ist ein Diagramm zur Erläuterung der quasidigitalen Entfernungsanzeige dargestellt und zeigt den Schaltzustand der Vibrationsgeber (6) zu den Abschnitten A...E in Abhängigkeit der Entfernung zu einem Hindernis. Dargestellt ist die Schallkeule des Gebers (3). Die Abschnitte A...E stellen die abgestuften Entfernungsbereiche dar, innerhalb derer die jeweiligen Vibrationsgeber (6) durch die Elektronik angesteuert werden. Als maximale Reichweite ist ein Bereich bis ca. 5 m anzusehen. Als minimale Reichweite ist ein Bereich <30 cm anzusehen. Innerhalb dieses Bereiches (<30 cm) ist zwar der zugehörige Vibrationsgeber (6) aktiv, eine Messung ist aber nicht mehr möglich.

### Aufstellung der verwendeten Bezugszeichen

- 1: Brillengestell
- 2: Stirnband
- 3: Geber (Sender mittig)
- 4: Emfänger (seitlich)
- 5: Empfänger (seitlich)
- 6: Vibrationsgeber
- 7: Auswerteinheit
- 8: Kabel

- A: Abschnitt )
- B: Abschnitt )
- c: Abschnitt ) als Länge innerhalb der Reichweite
- D: Abschnitt )
- E: Abschnitt )

## Patentansprüche

1. Ultraschallbrille für Blinde und Sehbehinderte mit einem Schwingungen aussendenden Geber (3) und Signale aufnehmenden_Empfängern (4, 5) sowie mit einer Auswerteinheit (7), die Informationen dem Benutzer zugänglich macht über Vibrationsgebern (6) mit Hautkontakt, **dadurch gekennzeichnet**, daß eine Ultraschallbrille am Sitz der Augen wie eine Brille getragen wird, die Ultraschallbrille die räumliche Verteilung von Hindernissen und deren Richtung und Entfernung erkennen kann, die Ultraschallbrille ein genau definiertes, voreinstellbares Gesichtsfeld erzeugt, wobei Geber (3) und Empfänger (4, 5) Ultraschall-Sender bzw. -Empfänger sind und die Ultraschallbrille eine Auswertschaltung pro Empfänger (4, 5) aufweist, wobei das Voreinstellen des Gesichtsfeldes mittels Potentiometer die Reichweite der Ultraschallbrille in fünf gleiche Abschnitte (A...E), die über die Vibrationsgeber (6) entlang der Stirn angezeigt werden können, unterteilt und jedem Vibrationsgeber (6) eine definierte Reichweite zugeordnet werden kann mit gleichzeitiger Fehlererkennung bei fehlendem Echo durch Ausschalten aller Vibrationsgeber (6).

2. Ultraschallbrille nach Anspruch 1, **dadurch gekennzeichnet**, daß die Ultraschallbrille mit optischen Gläsern versehen wird, um stark Sehbehinderten eine zusätzliche Orientierung zu verschaffen.

3. Ultraschallbrille nach Anspruch 1 und 2, **dadurch gekennzeichnet**, daß optische Lichtquellen zur Entfernungsanzeige eingebaut werden.

## Claims

1. Ultrasonic spectacles for the blind and visually impaired, having a sensor (3) and receivers (4, 5) which receive signals, and having an evaluation unit (7) which renders information accessible to the user via vibration sensors (6) with skin contact, **characterized in that** ultrasonic spectacles are worn like spectacles on the seat of the eyes, the ultrasonic spectacles can detect the spatial distribution of obstacles and their direction and distance, and the ultrasonic spectacles produce a precisely defined field of view which can be preset, the sensor (3) and receivers (4, 5) being an ultrasonic transmitter and ultrasonic receivers, and the ultrasonic spectacles having one evaluation circuit per receiver (4, 5), the presetting of the field of view by means of potentiometers subdividing the range of the ultrasonic spectacles into five equal segments (A...E),. which can be displayed along the forehead via the vibration sensors (6), and it being possible for each vibration sensor (6) to be assigned a defined range with simultaneous fault recognition in the event of a missing echo by switching off all the vibration sensors (6).

2. Ultrasonic spectacles according to Claim 1, **characterized in that** the ultrasonic spectacles are provided with optical lenses in order to provide severely visually impaired persons with additional orientation.

3. Ultrasonic spectacles according to Claims 1 and 2, **characterized in that** optical light sources are installed for distance indication.

## Revendications

1. Lunettes à ultrasons pour aveugles et malvoyants avec un émetteur (3) émettant des oscillations et des récepteurs (4, 5) recevant des signaux ainsi qu'un module d'interprétation (7) qui rend les informations accessibles à l'utilisateur par le biais d'émetteurs de vibrations (6) en contact avec la peau, **caractérisées en ce que** des lunettes à ultrasons sont portées sur le nez de la même manière que des lunettes, les lunettes à ultrasons peuvent détecter la répartition dans l'espace des obstacles ainsi que leur direction et leur éloignement, les lunettes à ultrasons génèrent un champ de vision parfaitement défini pouvant être préréglé, l'émetteur (3) et les récepteurs (4, 5) étant un émetteur ou des récepteurs à ultrasons et les lunettes à ultrasons présentant un circuit d'interprétation par récepteur (4, 5), le préréglage du champ de vision au moyen de potentiomètres partageant la portée des lunettes à ultrasons en cinq sections (A ... E) égales qui peuvent être indiquées le long du front par le biais d'émetteurs de vibrations (6) et une portée donnée pouvant être attribuée à chaque émetteur de vibrations (6) avec en même temps détection de défaut en cas d'absence d'écho par mise hors service de tous les émetteurs de vibrations (6).

2. Lunettes à ultrasons selon la revendication 1, **caractérisées en ce que** les lunettes à ultrasons sont munies de verres optiques afin de procurer aux grands malvoyants un moyen d'orientation supplémentaire.

3. Lunettes à ultrasons selon la revendication 1 et 2, **caractérisées en ce que** des sources de lumière optiques sont intégrées pour la signalisation à distance.
